# EUROPEAN PATENT APPLICATION

(11) **EP 2 244 413 A1**
(43) Date of publication of application: **27.10.2010**
(21) Application number: 09703554.7
(22) Date of filing: 14.01.2009
(51) Int. Cl.: H04L 9/08, H04W 12/00, H04N 7/16

(54) **A SECURE TRANSMISSION METHOD FOR BROADBAND WIRELESS MULTIMEDIA NETWORK BROADCASTING COMMUNICATION**

(30) Priority: 17.01.2008 CN 200810017315
(71) Applicant: China Iwncomm Co., Ltd., Xi'an, Shaanxi 710075 (CN)
(72) Inventor: TIE, Manxia, Xi'an, Shaanxi 710075 (CN); CAO, Jun, Xi'an, Shaanxi 710075 (CN); PANG, Liaojun, Xi'an, Shaanxi 710075 (CN); LAI, Xiaolong, Xi'an, Shaanxi 710075 (CN); HUANG, Zhenhai, Xi'an, Shaanxi 710075 (CN)
(74) Representative: Witte, Weller & Partner
(86) International application number: PCT/CN2009/070142
(87) International publication number: WO 2009/092318

(57) **Abstract**

A secure transmission method for broadband wireless multimedia network broadcasting communication includes the following steps: a secure channel between big base station and small base station is established by utilizing security protocols; the big base station distributes a Broadcast Traffic Encryption Key to each small base station through the secure channel; the small base station transmits the Broadcast Traffic Encryption Key to the user passing the authentication and authorization. The above solution solves the problem of broadcast secure communication of the big base station working in the mixed covering mode of large and small cells, realizes the identification of not only the user but also the base station, and ensures that only the authorized user can receive broadcast service.

## Description

This application claims the priority to Chinese Patent Application No. 200810017315.1, filed with the Chinese Patent Office on January 17 2008 and entitled "Secure transmission method for broadcast traffic over broadband wireless multimedia network", which is hereby incorporated by reference in its entirety.

### Field of the Invention

The present invention relates to a secure transmission method for broadcast traffic over a broadband wireless multimedia network.

### Background of the Invention

A Broadband Wireless Multimedia Network (BWM) is intended to seek a technical approach for efficient and low-cost operation to attain the general goal of "Tri-Network Integration" at all aspects from different sides of an air interface, a wireless access network, a core network, a service platform, a terminal, etc.

The BWM network is a new type of broadband wireless mobile network integrating technical features of a mobile television network and a broadband wireless access network, and also the BWM network is distinguished from the broadband wireless access network and the mobile television network. The BWM network can be configured with a powerful IP core network and integrated service management platform, and one operation and maintenance support platform is configured for different terminal services. In terms of the architecture of the wireless access network, the BWM network takes into full consideration networking features of the mobile television network and the broadband wireless access network to support both a large-cell mode covered by large base stations of a traditional broadcast television network and a small-cell mode covered by only small base stations featuring cellular networking. Also in hotspot and indoor coverage scenarios, optimization of networking is allowed in a point-to-point or point-to-multipoint communication mode.

The BWM network can be planned in three typical network modes:

1) A large-cell coverage mode constituted of large base stations, i.e., a broadcast base station-only application mode.

A single Broadcast Base Station (BBS), also referred to as a large base station, is applied in a mode largely taking into consideration a smooth transition from an existing broadcast system to the BWM network. In this application mode, a single Broadcast Base Station (BBS) can cover a range of approximately 50km, and several broadcast base stations can thus cover a city. The existing broadcast system is a unidirectional broadcast system, and therefore in the broadcast base station-only application mode of the BWM, the access network portion involves only the BBS and a Mobile Station (MS) which receives a unidirectional video/audio broadcast program from the single Broadcast Base Station (BBS)

The traditional large-cell coverage mode is the most appropriate network planning solution when an operator chooses to operate only a broadcast television/audio service.

2) A hybrid coverage mode of large and small cells constituted of large and small base stations, i.e., an application mode with broadcast plus cellular base stations.

In this operation mode, broadcast base stations function identically to those in the broadcast base station-only mode, and several of them transmit synchronous unidirectional broadcast programs (network-wide broadcast). A Cellular Base Station (CBS) also referred to as a small base station enables bidirectional transmission of data and provides a return path for unidirectional network-wide broadcast so as to support an on-demand service and enhance a security mechanism of, e.g., authorizing and authenticating a user, etc.

The broadcast television/audio traffic is transmitted by a large base station and the broadcast wireless data traffic is transmitted from a small base station, so that base stations of the broadcast television/audio system and the cellular system that have been already deployed can be used to reduce an engineering cost of deploying the base stations and improve the lifetime and efficiency of existing devices. Also, the hybrid wireless network with a very strong flexibility for deployment of an operation service accommodates an operation mode in which the broadcast television/audio service and a broadcast wireless access service are separated and integrated, thereby facilitating an evolved operation enforcement mode in which the broadcast television/audio service is firstly deployed and the broadcast wireless access service are then deployed. The quality of service of the broadcast television/audio service can also be guaranteed preferentially, which is appropriate especially for a business service deployed largely by a traditional broadcast television operator.

3) A small-cell coverage mode consisted of only small base stations, i.e., a cellular base station-only application mode.

In the cellular base station (CBS)-only application mode, the entire BWM is covered in a cellular structure only by the CBSs. Time-Division Multiplexing (TDM), Frequency-Division Multiplexing (FDM) or hybrid multiplexing can be adopted between the CBSs. In this application mode, network-wide broadcast originally performed by a BSS is now performed by a CBS. Therefore, services supported by the CBS include a mobile television/audio service in network-wide broadcast mode and a broadband wireless access service in a cellular communication mode.

The BWM network integrating data communication and broadcast communication belongs to a new type of wireless network architecture and has to address the issues of secure access and confidential communication. Since the large base station-only mode does not comply with the goal of tri-network integration, this mode is other than a predominant mode of the BWM network, so that the security solution of the BWM network in this mode will not be under discussion, and a discussion will be presented about the security of the BWM network in the small base station-only mode or the hybrid application mode with large and small base stations. In the cellular base station-only application mode, the Privacy Key Management Version 2 (PKM2) available from the IEEE802.16e or the security protocol of the Tri-element Peer Authentication-based Access Control method (TePA-AC) can be utilized to perform identity authentication and negotiation and distribution of a service key between a user and a base station for a secure access of the user and confidential transmission of traffic. In the hybrid application mode with large and small base stations, confidential or authorized transmission is sometimes also necessary for a broadcast traffic service (video and audio) of a large base station. However, the large base station usually without any uplink channel can not receive information from the user and consequently the authorization and secure communication between the large base station and the user can not be performed.

### Summary of the Invention

Embodiments of the present invention provide a secure transmission method for broadcast traffic over a broadband wireless multimedia network to perform authorization and secure communication between a large base station and a user in the hybrid application mode with large and small base stations, and a technical solution thereof is as follows:

A secure transmission method for broadcast traffic over a broadband wireless multimedia network includes:
establishing a secure channel between a large base station and a small base station in a security protocol;
distributing, by the large base station, a broadcast traffic encryption key to the small base station over the secure channel; and
transmitting, by the small base station, the broadcast traffic encryption key to a user which passes authentication and authorization.

Where the security protocol may be the key management protocol PKM2 of the IEEE802.16e or the security protocol of the Tri-element Peer Authentication-based Access Control method (TePA-AC).

With the key management protocol PKM2 proposed in the IEEE802.16e or the security protocol of the Tri-element Peer Authentication-based Access Control method (TePA-AC), the foregoing technical solution establishes a trust relationship between large and small base stations to form a secure channel so that a broadcast traffic encryption key of the large base station can be distributed to the small base station over the secure channel, which in turn distribute it to respective authorized users, thus ensuring that only an authorized user can receive broadcast traffic of the large base station and addressing the issue of securing broadcast traffic of the large base station operating in the hybrid coverage mode of large and small cells without any uplink channel.

The technical solution of the present invention has the following advantages:

1) Both identity authentication of a user and that of a base station are performed;

2) It is ensured that only an authorized user can receive broadcast traffic;

3) Different traffic encryption keys can be distributed for different broadcast services; and

4) The encryption key for broadcast traffic is updated dynamically.

### Brief Description of the Drawings

Fig.1 is a schematic diagram of a method according to a first embodiment of the present invention; and

Fig.2 is a schematic diagram of a method according to a second embodiment of the present invention.

### Detailed Description of the Invention

The technical solution of the present invention will be further detailed hereinafter in connection with the drawings and the embodiments to make the foregoing object and advantages of the present invention more apparent.

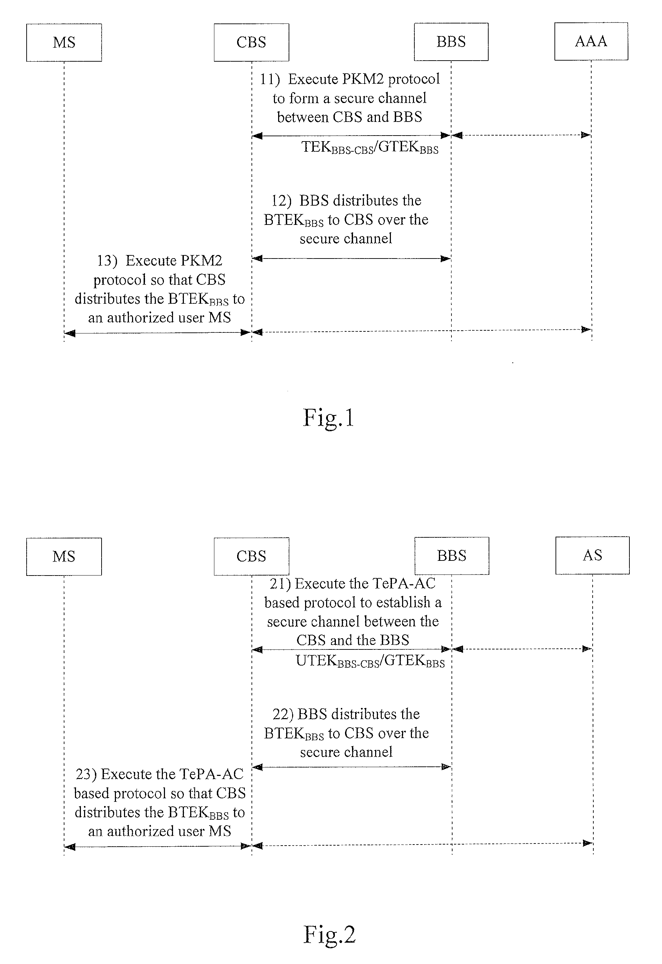

Referring to Fig.1, specific steps of a first embodiment of the present invention are as follows:

11) A trust relationship is established between a large station and each of small base stations in the PKM2 protocol of the IEEE802.16e to form a secure channel;

11.1) During networking, firstly the RSA-based authorization protocol or the EAP authentication protocol is executed between the large and small base stations to perform identity authentication and negotiation of an authorization key AK_{BBS-CBS} between the large and small base stations, where an Authentication, Authorization and Accounting (AAA) server participates in the application of the EAP authentication protocol;

11.2) Based on the authorization key AK_{BBS-CBS}, the large and small base stations negotiate traffic encryption keys TEK_{BBS-CBS} between the large and small base stations and a group traffic encryption key GTEK_{BBS} of the large base station and distribute the TEK_{BBS-CBS} and GTEK_{BBS} in a key exchange protocol. Here, the traffic between the large and small base stations includes a message from the large base station to notify the small base stations of its broadcast traffic encryption key BTEK_{BBS} and other management messages;

12) The large base station distributes the broadcast traffic encryption key BTEK_{BBS} secretly to the respective small base stations over the secure channel;

The large base station secretly distributes the broadcast traffic encryption key BTEK_{BBS} to the respective small base stations by using the traffic encryption keys TEK_{BBS-CBS} already negotiated between the large and small base stations or notifies securely the respective small base stations of the broadcast traffic encryption key BTEK_{BBS} by using the group traffic encryption key GTEK_{BBS} already distributed from the large base station to the respective small base stations;

13) When a user logs onto one of the small base stations, he or she obtains the broadcast traffic encryption key BTEK_{BBS} of the large base station after passing authentication and authorization in the PKM2 protocol of the IEEE802.16e;

13.1) When the user logs onto the small base station, the RSA-based authorization protocol or the EAP authentication protocol is executed to perform identity authentication and negotiation of an authorization key AK_{CBS-MS} between the user and the small base station, where the AAA server participates in the application of the EAP authentication protocol; and

13.2) Based on the authorization key AK_{CBS-MS}, the small base station distributes a group key encryption key GKEK_{BS} of the base station and a group traffic encryption key GTEK_{BS} to the user in the key exchange protocol, where the group traffic encryption key GTEK_{BS} includes both a group traffic encryption key GTEK_{CBS} of the small base station and the broadcast traffic encryption key BTEK_{BBS} of the large base station. This process ensures that only a legal authorized user can obtain the broadcast traffic encryption key BTEK_{BBS} of the large base station so that the authorized user can receive broadcast traffic of the large base station secretly.

Referring to Fig.2, specific steps of a second embodiment of the present invention are as follows:

21) A trust relationship is established between a large station and each of small base stations in the security protocol of the Tri-element Peer Authentication-based Access Control method (TePA-AC) to form a secure channel;

21.1) During networking, firstly an access authentication and authorization protocol is executed between the large and small base stations to perform identity authentication and negotiation of an authorization key AK_{BBS-CBS} between the large and small base stations through an Authentication Server (AS);

21.2) Based on the authorization key AK_{BBS-CBS}, the large and small base stations negotiate unicast traffic encryption keys UTEK_{BBS-CBS} between the large and small base stations and a group traffic encryption key GTEK_{BBS} of the large base station and distribute the UTEK_{BSS-CBS} and GTEK_{BBS} in a connection traffic key management protocol. Here, the traffic between the large and small base stations includes a message from the large base station for notifying the small base stations of its broadcast traffic encryption key BTEK_{BBS} and other management messages;

22) The large base station distributes the broadcast traffic encryption key BTEK_{BBS} secretly to the respective small base stations over the secure channel;

The large base station distributes the broadcast traffic encryption key BTEK_{BBS} securely to the respective small base stations by using the unicast traffic encryption keys UTEK_{BBS-CBS} already negotiated between the large and small base stations or notifies securely the respective small base stations about the broadcast traffic encryption key BTEK_{BBS} by using the group traffic encryption key GTEK_{BBS} already distributed from the large base station to the respective small base stations;

23) When a user logs onto one of the small base stations, he or she obtains the broadcast traffic encryption key BTEK_{BBS} of the large base station after passing authentication and authorization in the security protocol of the Tri-element Peer Authentication-based Access Control method (TePA-AC);

23.1) When the user logs onto the small base station, the access authentication and authorization protocol is executed to perform identity authentication and negotiation of an authorization key AK_{CBS-MS} between the user and the small base station through the authentication server AS; and

23.1) Based on the authorization key AK_{CBS-MS}, the small base station distributes a group key encryption key GKEK_{BS} of the base station and a group traffic encryption key GTEK_{BS} in a group connection traffic key management protocol, where the group traffic encryption key GTEK_{BS} includes both a group traffic encryption key GTEK_{CBS} of the small base station and the broadcast traffic encryption key BTEK_{BBS} of the large base station. This process ensures that only a legal authorized user can obtain the broadcast traffic encryption key BTEK_{BBS} of the large base station so that the authorized user can receive broadcast traffic of the large base station secretly.

In practical applications, the large station can adopt different broadcast traffic encryption keys for secure transmission as the broadcast traffic varies, and therefore, there may be a plurality of broadcast traffic encryption keys distributed to the respective small base stations in the respective steps 12) and 22) in the two embodiments. For further improved security, the broadcast traffic encryption key of the large base station may be updated dynamically, and the large base station may secretly notify the respective small base stations of the updated broadcast traffic encryption keys by using the group traffic encryption key GTEK_{BBS} of the large base station, then the small base stations notify respective authorized users of the updated broadcast traffic encryption keys secretly by using the group key encryption keys GKEK_{BS} of the small base stations.

## Claims

1. A secure transmission method for broadcast traffic over a broadband wireless multimedia network, comprising:
establishing a secure channel between a large base station and a small base station in a security protocol;
distributing, by the large base station, a broadcast traffic encryption key to the small base station over the secure channel; and
transmitting, by the small base station, the broadcast traffic encryption key to a user which passes authentication and authorization.

2. The method according to claim 1, wherein the security protocol is the key management protocol PKM2 of the IEEE802.16e.

3. The method according to claim 2, wherein establishing the secure channel between the large station and the small base station in the security protocol comprises:
firstly executing the RSA-based authorization protocol or the EAP authentication protocol between the large station and the small base station to perform identity authentication and negotiation of an authorization key AK_{BBS-CBS} between the large station and the small base station; and
based on the authorization key AK_{BBS-CBS}, negotiating, by the large station and the small base station, a traffic encryption key TEK_{BBS-CBS} between the large station and the small base station and group traffic encryption key GTEK_{BBS} of the large base station in a key exchange protocol.

4. The method according to claim 2, wherein distributing by the large base station the broadcast traffic encryption key to the small base station over the secure channel comprises:
distributing, by the large base station, the broadcast traffic encryption key BTEK_{BBS} to the small base station by using the negotiated traffic encryption key TEK_{BBS-CBS}, or notifying, by the large base station, the small base station of the broadcast traffic encryption key BTEK_{BBS} by using the group traffic encryption key GTEK_{BBS} distributed from the large base station to the small base station.

5. The method according to claim 2, wherein transmitting by the small base station the broadcast traffic encryption key to the user which passes authentication and authorization comprises:
when the user logs onto the small base station, executing the RSA-based authorization protocol or the EAP authentication protocol to perform identity authentication and negotiation of an authorization key AK_{CBS-MS} between the user and the small base station; and
distributing, by the small base station, a group key encryption key GKEK_{BS} and a group traffic encryption key GTEK_{BS} to the user in a key exchange protocol based on the authorization key AK_{CBS-MS}.

6. The method according to any one of claims 3 to 5, wherein, group traffic encryption key GTEK_{BBS} of the large base station in a key exchange protocol when the broadcast traffic encryption key BTEK_{BBS} of the large base station is updated, the large base station notifies the small base station of the updated broadcast traffic encryption key BTEK_{BBS} by using the group traffic encryption key GTEK_{BBS} of the large base station, and the small base station notify the authorized user of the updated broadcast traffic encryption key BTEK_{BBS} by using group key encryption key GKEK_{BS} of the small base station.

7. The method according to claim 1, wherein the security protocol is a security protocol of the Tri-element Peer Authentication-based Access Control method, TePA-AC.

8. The method according to claim 7, wherein establishing the secure channel between the large station and the small base station in the security protocol comprises:
executing an access authentication and authorization protocol between the large station and the small base station to perform identity authentication and negotiation of an authorization key AK_{BBS-CBS} between the large station and the small base station through an Authentication Server AS; and
based on the authorization key AK_{BBS-CBS}, negotiating, by the large station and the small base station, a unicast traffic encryption key UTEK_{BBS-CBS} between the large station and the small base station and a group traffic encryption key GTEK_{BBS} of the large base station in a connection traffic key management protocol.

9. The method according to claim 7, wherein distributing by the large base station the broadcast traffic encryption key to the small base station over the secure channel comprises:
distributing, by the large base station, the broadcast traffic encryption key BTEK_{BBS} to the small base station by using the negotiated unicast traffic encryption key UTEK_{BBS-CBS}, or securely notifying, by the large base station, the small base station of the broadcast traffic encryption key BTEK_{BBS} by using the group traffic encryption key GTEK_{BBS} distributed from the large base station to the small base station.

10. The method according to claim 7, wherein transmitting by the small base station the broadcast traffic encryption key to the user which passes authentication and authorization comprises:
when the user logs onto the small base station, executing the access authentication and authorization protocol to perform identity authentication and negotiation of an authorization key AK_{CBS-MS} between the user and the small base station through the Authentication Server AS; and
distributing, by the small base station, a group key encryption key GKEK_{BS} and a group traffic encryption key GTEK_{BS} to the user in a group connection traffic key management protocol based on the authorization key AK_{CBS-MS}.

11. The method according to any one of claims 8 to 10, wherein when the broadcast traffic encryption key BTEK_{BBS} of the large base station is updated, the large base station notifies the small base station of the updated broadcast traffic encryption key BTEK_{BBS} via the group traffic encryption key GTEK_{BBS} of the large base station, and the small base station notifies the authorized user of the updated broadcast traffic encryption key BTEK_{BBS} by using a group key encryption key GKEK_{BS} of the small base station.

12. The method according to claim 5 or 10, wherein the group traffic encryption key GTEK_{BS} comprises a group traffic encryption key GTEK_{CBS} of the small base station and the broadcast traffic encryption key BTEK_{BBS} of the large base station.
